# EUROPEAN PATENT APPLICATION

(11) **EP 1 221 337 A1**
(43) Date of publication of application: **10.07.2002**
(21) Application number: 02250015.1
(22) Date of filing: 03.01.2002
(51) Int. Cl.: B01D 53/047, F25J 3/04

(54) **Pressure swing adsorption process for removing carbon dioxide and water vapour from a gas mixture**

(30) Priority: 03.01.2001 US 753851
(71) Applicant: THE BOC GROUP, INC., Murray Hill, New Providence, New Jersey 07974-2082 (US)
(72) Inventor: Kumar, Ravi, Allentown, PA 18103 (US); Mcilroy, Christopher Benjamin, Basking Ridge, NJ 07920 (US); Schluter, Robert Warren, New City, NY 10956 (US); Pulsinelle, John, Milford, NJ 08848 (US); Mitariten, Michael John, Pittstown, NJ 08867 (US)
(74) Representative: Wickham, Michael

(57) **Abstract**

In a pressure swing adsorption (PSA) pre-purification process for a feed gas prior to its introduction into a cryogenic distillation unit, at least four adsorbent beds are used. There is performed on each bed the steps, performed in a cyclical manner, of feed, blowdown, purge and repressurisation in a repeating sequence. Optionally, a bed-to-bed pressure equalisation step is employed in the process. The resulting process provides for continual repressurisation during the cycle and a constant flow rate of purified feed gas to the distillation unit.

## Description

The present invention provides for a method for removing contaminating gas components (water vapour and carbon dioxide) from a gas (e.g. air). More particularly, the present invention provides for a multi-bed pressure swing adsorption (PSA) pre-purification process (PPU) for removing water and carbon dioxide from air, for example upstream to its introduction into a cryogenic distillation unit.

Adsorption is well established as a unit operation for the production of pure gases, the purification of gases and their mixtures up-front, their further physical and/or chemical handling, and for the treatment of fluid waste streams. Purification and separation of atmospheric air comprises one of the main areas in which adsorption methods are widely used. For an increase of their efficiency, novel adsorbent formularies and processes of their utilization are being sought continuously.

One of the areas of strong commercial and technical interest is pre-purification of air upstream of its cryogenic distillation. Conventional air separation units (ASUs) for the production of nitrogen, N₂, and oxygen, O₂, and also for argon, Ar, by the cryogenic separation of air distillation columns which operate at very low temperatures. Due to these low temperatures, it is essential that water vapor, H₂O, and carbon dioxide, CO₂, are removed from the compressed air feed to an ASU. If this is not done, the low temperature sections of the ASU will freeze up making it necessary to halt production and warm the clogged sections to revaporize and remove the offending solid mass of frozen gases. This would be very costly unless a reversing heat exchanger is used. It is generally recognized that, in order to prevent freeze up of an ASU, the content of H₂O and CO₂ in the compressed air stream entering the cryogenic parts of the plant must be less than 0.1 ppm and 1.0 ppm, respectively. Other contaminants such as low-molecular-weight hydrocarbons and nitrous oxide, N₂O, may also be present in the air feed to the cryogenic temperature distillation columns, and they are also desirably removed upstream of the separation to prevent a hazardous process regime from occurring.

Current commercial methods for the pre-purification of air include reversing heat exchangers, temperature swing adsorption, pressure swing adsorption and catalytic pre-purification techniques.

Reversing heat exchangers remove water vapour and carbon dioxide by alternately freezing and evaporating them in their passages. Such systems require a large amount, typically 50 % or more, of product gas for the cleaning, i.e., regenerating of their passages. Therefore, product yield is limited to about 50 % of feed. As a result of this significant disadvantage, combined with characteristic mechanical and noise problems, the use of reversing heat exchangers as a means of air pre-purification in front of ASUs has steadily declined over recent years.

In temperature swing adsorption (TSA) pre-purification of air, the impurities are removed from air at relatively low ambient temperature, typically at about (5 - 15) ° C, and regeneration of the adsorbent is carried out at elevated temperatures, e.g., in a region of about (150 - 250)° C. The amount of product gas required for regeneration is typically only about (10 - 25) % of the product gas. Thus, a TSA process offers a considerable improvement over that of utilizing reversing heat exchangers. However, TSA processes require evaporative cooling or refrigeration units to chill the feed gas and heating units to heat the regeneration gas. They may, therefore, be disadvantageous both in terms of capital costs and energy consumption despite of being more cost-effective than the reversing heat exchangers' principle referred to above.

Pressure swing adsorption (PSA) (or pressure-vacuum swing adsorption (PVSA)) processes are an attractive alternative to TSA processes, for example, as a means of air pre-purification, since both adsorption and regeneration via desorption, are performed, as a rule, at ambient temperature. PSA processes, in general, do require substantially more regeneration gas than TSA processes. This can be disadvantageous if high recovery of cryogenically separated products is required. If a PSA air pre-purification unit is coupled to a cryogenic ASU plant, a waste stream from the cryogenic section, which is operated at a pressure close to ambient pressure, is used as purge for regenerating the adsorption beds. Feed air is passed under pressure through a layer of particles of activated alumina, to remove the bulk of H₂O and CO₂, and then through a layer of zeolite particles such as of the FAU structural type, e.g., NaX zeolite, to remove the remaining low concentrations of H₂O and CO₂. In other configurations, only activated alumina is used to remove both H₂O and CO₂ from feed air.

It will be appreciated that, although many pre-purification methodologies based on PSA have been proposed in the literature, only a few are actually being used commercially due to high capital costs associated therewith.

In general, known PSA pre-purification processes require a minimum of 25 %, typically 40 - 50 %, of the feed as purge gas. As a result of having low adsorbent specific product, such processes have high capital cost. Reduction in capital costs of air pre-purification systems is particularly important when a large plant is contemplated. Therefore, it will be readily appreciated that, for large plants, improvements in pre-purification system operation can result into considerable cost savings.

According to the present invention there is provided a pressure swing adsorption process for removing carbon dioxide and water vapour from a feed gas comprising introducing said feed gas through at least four beds of adsorbent and operating each bed in such that it undergoes an operational cycle of steps in sequence, of feed, blowdown, purge and repressurisation, and purified feed gas is produced, wherein the phase relation of the cycles end the duration of each repressurisation step is such that repressurisation is continuous.

This process utilizes constant and continual repressurisation throughout the cycle and does not vent purified feed gas to the atmosphere. Thus, production of purified air at a constant rate is facilitated without the need to employ a reservoir to collect the product from the adsorbent beds. If desired, the process according to the invention can be performed with a bed-to-bed pressure equalisation step.

The process according to the invention will now be described by way of example with reference to the accompanying drawings, in which:
Fig. 1 is a schematic cycle diagram representing a four bed PSA PPU cycle without a pressure equalisation step.
Fig. 2 is a schematic cycle diagram representing a four bed PSA PPU cycle with a pressure equalization step.
Fig. 3 is a schematic cycle diagram representing a five bed PSA PPU cycle without a pressure equalization step.
Fig. 4 is a schematic cycle diagram representing a five bed PSA PPU cycle of Fig. 3 with a pressure equalization step.
Fig. 5 is a schematic cycle diagram representing a six bed PSA PPU cycle without a pressure equalization step. In this option, 3 beds are always on feed.
Fig. 6 is a schematic cycle diagram representing a six bed PSA PPU cycle of Fig. 5 with a pressure equalization step.
Fig. 7 is a schematic cycle diagram representing a six bed PSA PPU cycle without a pressure equalization step. In this option only 2 beds are always on feed, but at times 3 beds are on purge.
Fig. 8 is a schematic cycle diagram representing a six bed PSA PPU cycle of Fig. 7 with a pressure equalization step.
Fig. 9 is a schematic cycle diagram representing a five bed PSA PPU cycle without a pressure equalization step.

In the examples to be described below, the process provides for feed of air at high pressure to at the same time at least two beds. (The resulting purified feed gas is fed to a cryogenic distillation column at elevated pressure). In each example, at any one time one of the beds is blown down from the high feed pressure to pressure close to ambient levels. At least one of the beds at low pressure is purged (or regenerated) at low pressure using waste gas produced by the cryogenic distillation Further, at any one time, a purged/regenerated bed is being repressurised from ambient pressures to high feed pressure by using a part of the high pressure product from another bed.

Preferably, the process according to the invention employs five beds, however, any number of beds equal to or greater than four can be employed in this PSA PPU process. Activated alumina or silica gel may be employed in each bed to remove water and an X zeolite such as 13X may be used to remove carbon dioxide. Typically the X zeolite is an NaX zeolite with an Si/Al elemental ratio of the zeolitic phase between 0.9:1 and 1.3:1, preferably between 0.9:1 and 1.15:1, and most preferably between 0.95:1 and 1.08:1. Alternatively, only activated alumina may be used to remove both carbon dioxide and water. In another alternative, the adsorbent material may be a mixed adsorbent which may be a combination of Activated Alumina, X zeolite and/or silica gel and/or A zeolite.

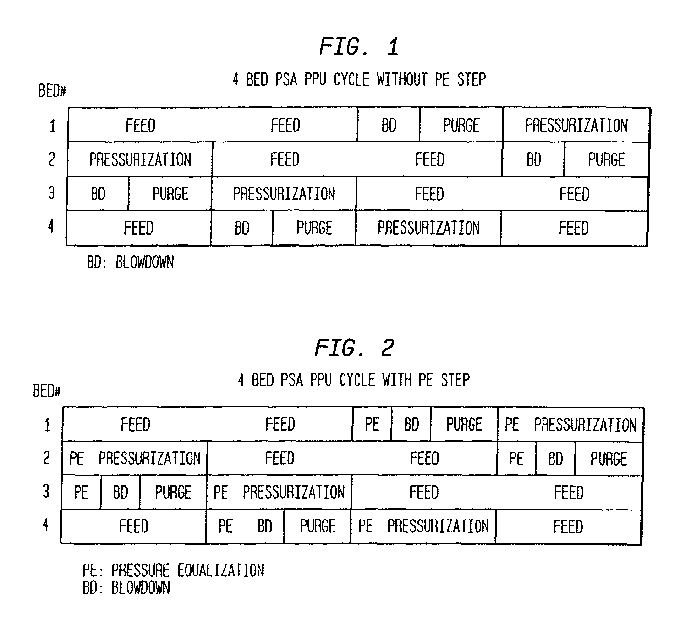

Examples of the improved PSA PPU process according to the present invention are shown schematically in Figures 1 to 8. Figures 1 and 2 represent a four bed PSA PPU cycle, respectively without and with an added pressure equalization step.

Each bed will cycle through the steps of feed with air, blowdown from high to ambient pressures (i.e. to approximately 1 atmosphere), purge with waste gas from the cryogenic air distillation unit and repressurisation from ambient to high feed pressure. (In cryogenic air separation processes the feed air pressure is typically in the range of 4 to 6 bar). When the added step of pressure equalisation is employed, it is performed concurrently with repressurisation: Further a constant product flow rate is maintained throughout each individual repressurisation step. Indeed, the product flow rate is maintained constant cycle. Even, if the added step of pressure equalization is not employed, the product flow rate is maintained. It can be seen from Figures 1 and 2 that at any time there is always one bed that is being repressurised (with product gas). There is thus able to be a constant flow of repressurisation gas, and this constant flow facilitates production of purified air at a constant rate.

The adsorption step of the present invention can be carried out at any of the usual and well-known pressures employed for gas phase pressure swing adsorption processes. This pressure envelope may vary widely but is dependent upon the pressure at which adsorption takes place as well as the pressure at which desorption of the gas occurs. Typically this range is about 20 bara in the adsorption step to about 0.05 bara in the purge step with a range of about 10 bara to about 0.15 bara preferred and a range of about 6 bara to about 1 bara is most preferred.

The temperature at which the process is carried out will typically range from about 5°C to about 35°C for the adsorption step, however, temperatures as high as 200°C can be employed.

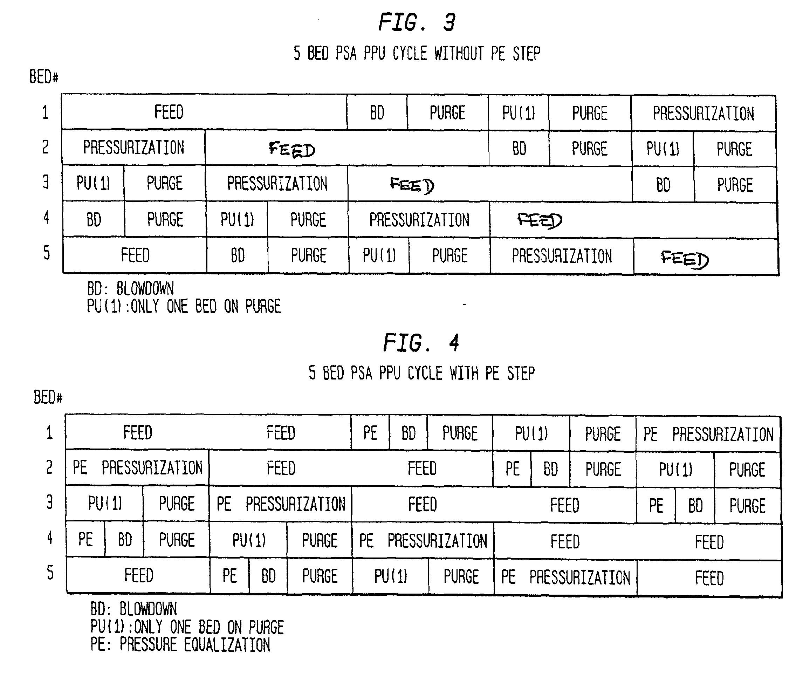

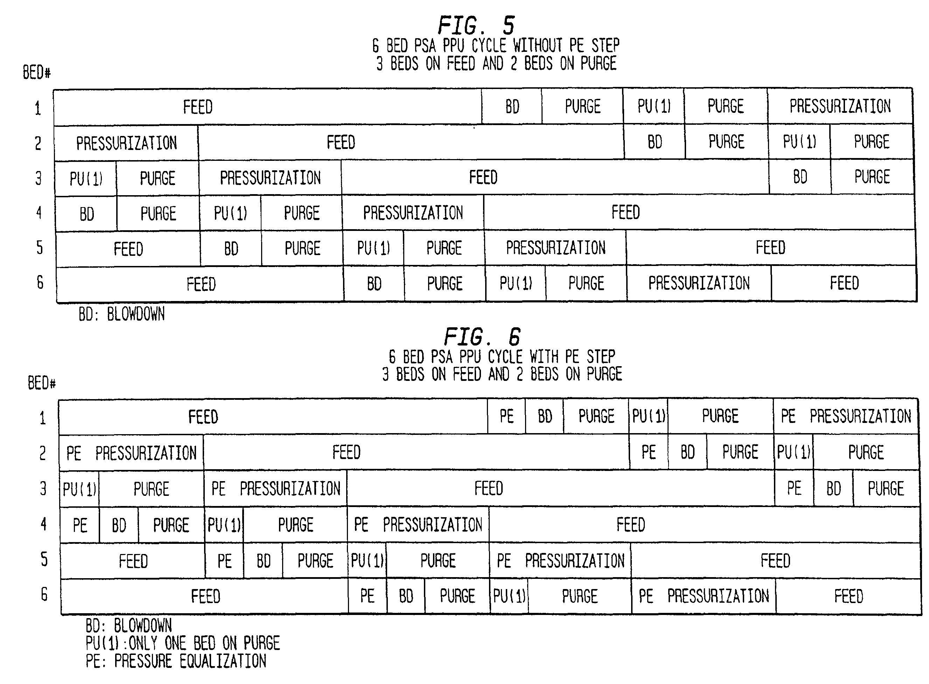

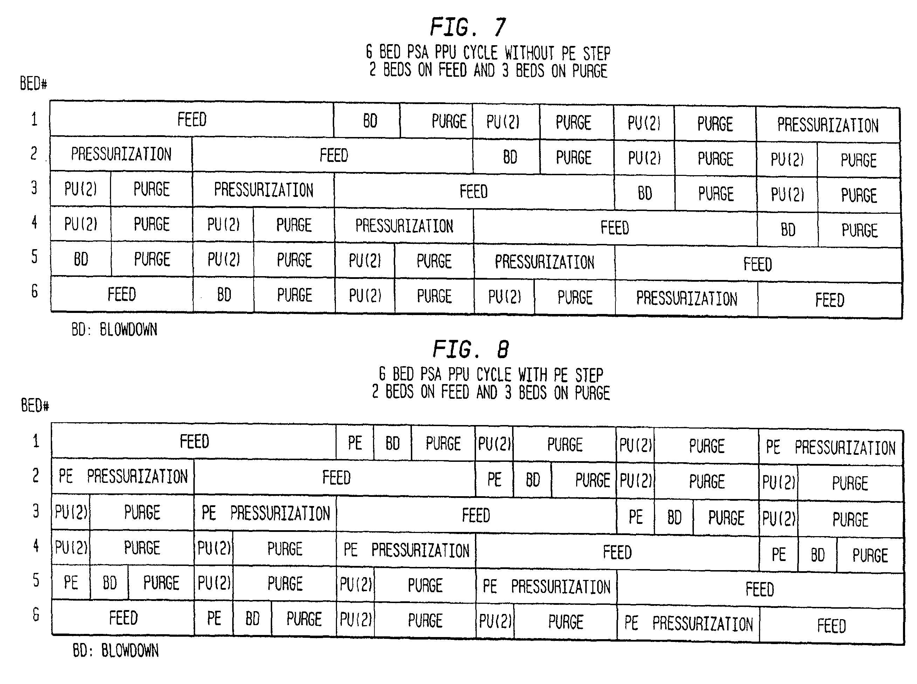

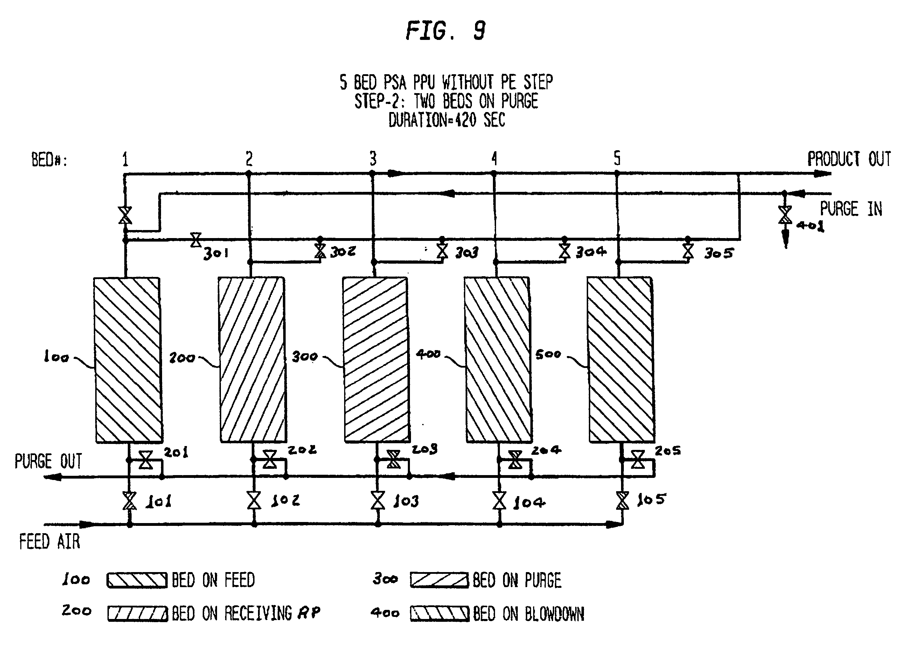

As demonstrated in Figures 3 and 4, the step of purging each bed can be accomplished in three connected but discrete steps. The purge is actually begun on two beds at once, followed by a single bed purge and then a two bed purge again. This phenomenon is also seen in Figures 5 and 6 where a six bed cycle is shown with three beds being simultaneously fed with two beds being purged together. Figures 7 and 8, though, describe schematically a six bed PSA PPU where two beds are being fed while three beds are purged. Accordingly, in this cycle, the cycle is feed, blowdown, three bed purge, two bed purge, three bed purge, two bed purge and three bed purge prior to pressure equalisation and/or repressurisation.

The following table represents design calculations for a five bed PSA PPU system operating under the inventive process (Figure 3).

**TABLE I**

| PSA PPU Design 450 Metric Tons Per Day O₂ Plant | |
|---|---|
| Feed Pressure | 6 bara |
| Feed Temperature | ambient |
| No. of Beds | 5 |
| Diameter | 3.9 m |
| Vessel (T-T) | 2.1 m |
| Adsorbent | 16,826 kg/bed |
| Feed Time | 960 sec/bed w/2 beds on-line |
| Blowdown Time | 60 sec/bed |
| Purge Time | 900 sec/bed w/2 beds on-purge |
| Pressurization Time | 480 sec/bed |

The following table demonstrates a valve sequence for a pressure swing adsorption pre-purification unit process with five beds without a pressure equalization step, as configured per Fig. 3. An O represents a fully open valve, OP is a valve open to a set position and OP1 is a valve open to a different set position.

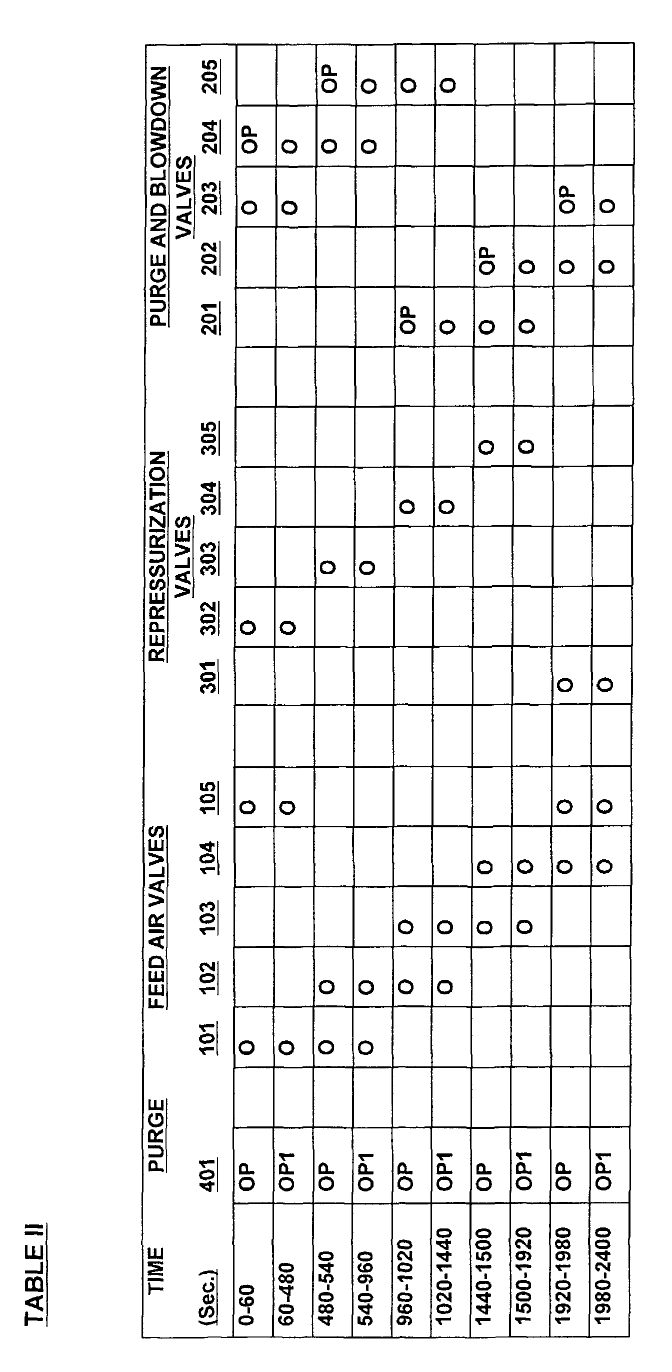

With additional reference to Fig. 9, a plant for performing pressure swing adsorption pre-purification process without a pressure equalization step in accordance with Figure 3 is shown. Five beds, 100, 200, 300, 400 and 500 are shown. The cycle begins with feed of air at high pressure to beds 100 and 500 through open valves 101 and 105, respectively. Bed 200 is repressurised through open valve 302 as open valve 202 had allowed for the bed 200 to be purged prior to its repressurisation with waste or purge gas. Bed 300 is purged while bed 400 is subjected to blowdown. Flow control valve 401 remains open fully or at a fixed, open position throughout the cycle so as to determine the rate at which purge gas flows through the plant shown in Figure 9. Each bed has an upstream on-off purge valve (not shown) associated with it in addition to the purge valves 201-205. The purge valves 201-205 also function as blow down valves. Thus during the purging of bed 300 the valve 203 is open and during the blowdown of the bed 400 the valve 204 is open.

As the cycle continues, valve 102 is open after repressurisation and bed 200 is fed with air. The third bed 300 is being repressurised through open valve 303 while the fourth bed 400 is purged through open valve 204. Feed to bed 500 is then stopped and bed 500 is blowndown through open valve 205. Feed continues to bed 200 and starts for bed 300. Bed 400 begins repressurisation through open valve 304 and bed 500 is purged through open valve 205.

As bed 500 is purged through open valve 205, bed 100 begins blowdown through valve 201. Beds 300 and 400 are fed with air through open valves 103 and 104 and bed 500 begins repressurisation through valve 305. As the cycle completes itself, beds 400 and 500 are fed with air through valves 104 and 105 as bed 100 begins repressurisation through open valve 301. Bed 200 is purged while bed 300 is blowndown and then purged. When bed 100 is finished with repressurisation, the cycle starts anew with bed 100 receiving a fresh feed of air. It can be seen that repressurisation of at least one bed is occurring throughout the cycle.

## Claims

1. A pressure swing adsorption process for removing carbon dioxide and water vapour from a feed gas comprising introducing said feed gas through at least four beds of adsorbent and operating each bed such that it undergoes an operational cycle of steps in sequence, of feed, blowdown, purge and repressurisation, wherein the phase relation of the cycles and the duration of each repressurisation step is such that repressurisation is continuous.

2. A process according to Claim 1, wherein from four to eight beds are present.

3. A process according to Claim 1, wherein said feed gas is air.

4. A process according to any one of the preceding claims, wherein said purified feed gas is fed to a cryogenic distillation unit.

5. A process according to any one of the preceding claims, wherein said adsorbent is selected from the group consisting of activated alumina, silica gel, type X zeolite, and mixtures thereof.

6. A process according to Claim 5, wherein said X zeolite is an NaX zeolite with an Si/Al elemental ratio between 0.9 and 1.3.

7. A process according to any one of the preceding claims, wherein the cycle further comprises a bed-to-bed, pressure equalisation step, in which one bed at a higher pressure communicates with another bed at a lower pressure.

8. A process according to any one of the preceding claims, wherein said purified feed gas is not vented to the atmosphere.

9. A process according to any one of the preceding claims, the purified gas flows to a cryogenic distillation unit, and distillation unit is used as the purge gas.

10. The process as claimed in Claim 1 wherein the feed gas pressure is about 6 bara and said blowdown is from about 6 bara to atmospheric pressure.
